# EUROPÄISCHE PATENTSCHRIFT

(11) **EP 2 673 169 B1**
(45) Veröffentlichungstag und Bekanntmachung des Hinweises auf die Patenterteilung: **11.04.2018**
(21) Anmeldenummer: 12704058.2
(22) Anmeldetag: 10.02.2012
(51) Int. Cl.: B60R 11/04

(54) **KAMERAANORDNUNG FÜR EIN FAHRZEUG UND VERFAHREN ZUM EINBAU**
CAMERA ARRANGEMENT FOR A VEHICLE AND METHOD FOR INSTALLATION
AGENCEMENT DE CAMERA POUR UN VÉHICULE ET LA MÉTHODE POUR L'INSTALLATION

(30) Priorität: 11.02.2011 DE 102011000684
(43) Veröffentlichungstag der Anmeldung: 18.12.2013
(73) Patentinhaber: Huf Hülsbeck & Fürst GmbH & Co. KG, 42551 Velbert (DE)
(72) Erfinder: BARTHEL, Joachim, 45329 Essen (DE)
(74) Vertreter: Bals, Rüdiger
(86) Internationale Anmeldenummer: PCT/EP2012/052279
(87) Internationale Veröffentlichungsnummer: WO 2012/107547

(56) Entgegenhaltungen:
- EP-A1- 0 076 578
- DE-A1-102009 008 281
- DE-A1-102009 008 283

## Beschreibung

Die Erfindung betrifft eine Vorrichtung, insbesondere für eine Heckklappe eines Fahrzeuges, mit einer Kameraeinheit, die zur Bilderfassung eines Außenbereichs des Fahrzeugs dient, und mit einer Bedieneinheit, die zur Bedienung eines Fahrzeugteils, wie z. B. einem elektrischen Schloss für eine Heckklappe, dient, gemäß dem Oberbegriff von Anspruch 1. Dabei sind die Kameraeinheit und die Bedieneinheit insbesondere nebeneinander mittels eines Trägerelements am Fahrzeug angeordnet. Zumindest die Kameraeinheit ist in einem Gehäuse gegen äußere Umwelteinflüsse geschützt untergebracht, wobei ein bewegliches Verschlusselement zum Verschließen einer Gehäuseöffnung vorhanden ist, welches durch die Antriebseinheit in zumindest zwei Endstellungen, nämlich eine Schließstellung und eine Offenstellung, bewegbar ist.

Des Weiteren ist die vorliegende Erfindung auch auf ein Verfahren zum Betrieb einer Vorrichtung, insbesondere für eine Heckklappe eines Fahrzeuges, mit einer Kameraeinheit und einer Bedieneinheit gemäß dem Oberbegriff von Anspruch 12 gerichtet.

Aus dem Stand der Technik sind zahlreiche Vorrichtungen bekannt, die dazu dienen, eine Kameraeinheit, insbesondere an der Heckklappe eines Fahrzeuges, anzuordnen, so dass diese eine Bilderfassung von dem Bereich hinter dem Fahrzeug ermöglicht. Das erhaltene Bild kann dann im Fahrzeug für den Fahrer angezeigt werden, um die Rückwärtsfahrt zu erleichtern. Um eine Verschmutzung der Kameraeinheit zu verhindern, ist diese hinter einem Verschlusselement angeordnet, welches von einer Schließstellung in eine Offenstellung überführbar ist, um die Bilderfassung der Kameraeinheit zu ermöglichen. Aus der Druckschrift DE 103 51 363 A1 ist beispielsweise eine derartige Vorrichtung bekannt. Ferner sind an modernen Fahrzeugen diverse Bedieneinheiten angeordnet, um z. B. die Heckklappe eines Fahrzeugs öffnen zu können. Aus dem Stand der Technik ist es auch bekannt, derartige Bedieneinheiten mit der Kameraeinheit in einer gemeinsamen Vorrichtung am Fahrzeug anzuordnen, um somit möglichst wenige separate Bauteile zu verwenden. Außerdem wird hierdurch die Montage der gemeinsamen Vorrichtung erleichtert. Nachteilig ist jedoch, dass eine derartige Vorrichtung einen entsprechend großen Bauraum benötigt. Die DE 10 2009 008 281 A1 offenbart eine gattungsgemäße Vorrichtung sowie ein gattungsgemäßes Verfahren.

Es ist somit Aufgabe der vorliegenden Erfindung, eine derartige Vorrichtung mit einer Kameraeinheit und einer Bedieneinheit bereit zu stellen, die über einen kompakten Aufbau für einen knappen Bauraum verfügt und ggf. leicht montierbar ist. Ferner ist es Aufgabe der vorliegenden Erfindung, ein entsprechendes Verfahren zur Montage einer derartigen Vorrichtung bereit zu stellen, wodurch eine einfache Montage auch bei knappem Bauraum ermöglicht wird.

Die vorliegende Aufgabe wird durch eine Vorrichtung mit einer Kameraeinheit und einer Bedieneinheit und den weiteren Merkmalen gemäß dem Patentanspruch 1 gelöst.

Die erfindungsgemäße Vorrichtung zeichnet sich dadurch aus, dass das Gehäuse für die Kameraeinheit zumindest zweiteilig aufgebaut ist. Dabei bildet das Trägerelement ein erstes Gehäuseteil, an dem die Bedieneinheit und die Kameraeinheit, insbesondere vormontiert, anordbar sind. An einem zweiten Gehäuseteil ist die Antriebseinheit, insbesondere an einer Außenwand des Gehäuses, anordbar. Durch den zweiteiligen Aufbau des Gehäuses lässt sich zunächst das Trägerelement mit dem ersten Gehäuseteil durch einen Durchbruch insbesondere in einem Karosserieteil von außen, gemeint ist einer Außenseite, am Fahrzeug montieren. Dabei kann der Durchbruch besonders klein ausgestaltet sein, da eben nicht die gesamte Vorrichtung mit allen Teilen und Elementen durch diesen Durchbruch hindurch geführt werden muss. Die zweite Gehäusehälfte lässt sich dann von Innen bzw. von einer Innenseite des Karosserieteils am Fahrzeug montieren, indem die beiden Gehäuseteile zusammengefügt werden. Somit ist es möglich, eine langgestreckte und schmale Bauform der erfindungsgemäßen Vorrichtung zu vermeiden, da die Vorrichtung durch das zweite Gehäuseteil auch seitlich ergänzt werden kann, so dass trotzdem ein kleiner Durchbruch, insbesondere an einem Karosserieteil des Fahrzeugs, ausreichend ist. Auch kann die erfindungsgemäße Vorrichtung bei sehr schwierigen Bauräumen eingesetzt werden, die eben nicht über eine große Einbautiefe verfügen.

Die Erfindung ist in diversen Ausgestaltungen durch die abhängigen Unteransprüche und die nachfolgende Beschreibung erläutert. Dabei gelten Merkmale und Details, die im Zusammenhang mit der erfindungsgemäßen Vorrichtung offenbart werden, auch im Zusammenhang mit dem erfindungsgemäßen Verfahren und umgekehrt, so dass bezüglich der Offenbarung zu den einzelnen Erfindungsaspekten stets wechselseitig Bezug genommen wird.

Bei der erfindungsgemäßen Vorrichtung kann es vorgesehen sein, dass die Gehäuseöffnung zumindest für die Kameraeinheit zur Bilderfassung des Außenbereichs eines Fahrzeugs dient und in dem ersten Gehäuseteil angeordnet ist. Hierbei kann das bewegliche Verschlusselement ebenfalls an dem ersten Gehäuseteil, wie die Kameraeinheit auch, angeordnet sein. Dabei kann das bewegliche Verschlusselement eine feste Drehachse, die insbesondere durch eine Lagerwelle ausgestaltet ist, aufweisen. Somit ist es fertigungstechnisch möglich, das Trägerelement bereits mit der Bedieneinheit und der Kameraeinheit zusammenzubauen, wodurch die weitere Montage am Fahrzeug erleichtert wird. Außerdem lässt sich die Zahl der Einzelteile der erfindungsgemäßen Vorrichtung somit deutlich reduzieren. Hierzu kann auch die Antriebseinheit insbesondere von außen, gemeint ist an einer Außenfläche des Gehäuses, an den zweiten Gehäuseteil angeordnet sein und über zumindest ein Verbindungselement das bewegliche Verschlusselement antreiben. Zu diesem Zweck kann ein Durchbruch in dem zweiten Gehäuseteil für das Verbindungselement vorhanden sein. Damit besteht die vorgefertigte Vorrichtung im Wesentlichen aus nur zwei Teilen, nämlich dem Trägerelement mit dem ersten Gehäuseteil und dem zweiten Gehäuseteil. Durch das Zusammenfügen der beiden Gehäuseteile lässt sich die erfindungsgemäße Vorrichtung funktionsfähig zusammensetzen.

Um das Zusammenfügen der beiden Gehäuseteile besonders zu erleichtern, ist eine Linearführung zwischen dem ersten Gehäuseteil bzw. dem Trägerelement und dem zweiten Gehäuseteil vorgesehen. Hierbei kann insbesondere das zweite Gehäuseteil seitlich, gemeint ist im Wesentlichen orthogonal zur Bewegungsrichtung der Kameraeinheit, an das erste Gehäuseteil heran geschoben werden.

Ferner ist im Rahmen der Erfindung eine Labyrinthdichtung zwischen dem ersten Gehäuseteil und dem zweiten Gehäuseteil vorhanden, um somit die zusammengefügten Teile abzudichten. Hierbei ist die Labyrinthdichtung durch die Linearführung gebildet. Somit lässt sich aus technischer Sicht eine besonders elegante Abdichtung des Gehäuses herstellen. Um die beiden Gehäuseteile unlösbar miteinander zu verbinden, kann zumindest eine Rastverbindung vorgesehen sein. Hierdurch lässt sich bewirken, dass nur durch das Zusammenfügen der beiden Gehäuseteile gleichzeitig eine gesicherte Verbindung erzeugt wird. Selbstverständlich können die beiden Gehäuseteile auch miteinander verschraubt, vernietet, verklebt oder verschweißt werden. Allerdings wird für die Rastverbindung zwischen den beiden Gehäuseteilen kein zusätzliches Werkzeug benötigt. Auch ist die Rastverbindung reversibel lösbar und trotzdem hält sie die beiden Gehäuseteile sicher zusammen.

Bei der erfindungsgemäßen Vorrichtung kann es vorgesehen sein, dass das Trägerelement zumindest eine erste, flache Gehäusewand des Gehäuses bildet, an der insbesondere ein Dichtungselement angeordnet ist, welches mit einer Gehäusekante des zweiten Gehäuseteils zusammenwirkt. Dabei kann diese erste Gehäusewand eine seitliche Wand des Gehäuses darstellen, die in Bewegungsrichtung der Kamera nach hinten an dem Trägerelement herausragt. Ebenfalls kann das Trägerelement zwei Gehäusewände des Gehäuses bilden, wobei die erste Gehäusewand flach ausgestaltet ist und im Wesentlichen orthogonal zur zweiten Gehäusewand angeordnet ist und die zweite Gehäusewand die Gehäuseöffnung aufweist, die von dem Verschlusselement verschließbar ist. Das Verschlusselement kann zum Schutz der Kameraeinheit und/oder der Bedieneinheit vorgesehen sein, wobei die jeweiligen Einheiten dann im Gehäuse der Vorrichtung geschützt untergebracht sind. Sofern auch die Bedieneinheit im Gehäuse der Vorrichtung angeordnet ist, kann eine Verschmutzung des Bedienteils weitestgehend vermieden werden, da diese ebenfalls von dem Verschlusselement geschützt wird. Auch die bereits erwähnte Antriebseinheit kann innerhalb des Gehäuses der Vorrichtung gegen äußere Umwelteinflüsse angeordnet sein. Optional ist es denkbar, dass die Bedieneinheit und/oder die Antriebseinheit außerhalb des Gehäuses, insbesondere über Rastverbindungsmittel angeordnet sind. Somit sind nur die besonders empfindlichen Einheiten, wie die Kameraeinheit innerhalb des Gehäuses geschützt untergebracht. Dadurch lässt sich auch der benötigte Bauraum für die erfindungsgemäße Vorrichtung auf ein Mindestmaß reduzieren. Außerdem ist es möglich, somit auf Standardbauteile für die Bedieneinheit und die Antriebseinheit zurückgreifen zu können, wodurch eine Kostensenkung bei der Herstellung möglich ist.

Bei der erfindungsgemäßen Vorrichtung kann die Kameraeinheit beweglich im Gehäuse angeordnet sein, wobei sich die Kameraeinheit in der Schließstellung I hinter dem Verschlusselement im Gehäuse befindet und in der Offenstellung II unverdeckt vom Verschlusselement zur Bilderfassung positioniert ist. Hierbei kann die Kameraeinheit durch die Antriebseinheit angetrieben werden, um sich zumindest im Gehäuse und gegebenenfalls aus dem Gehäuse zu bewegen. Die zuvor erwähnte Antriebseinheit kann identisch mit der Antriebseinheit für das Verschlusselement sein. Insbesondere kann die Kameraeinheit mit einer Antriebsmechanik für das Verschlusselement verbunden sein, so dass durch die Antriebseinheit die Kameraeinheit und das Verschlusselement gleichzeitig angetrieben werden können. Somit lässt sich die Anzahl der Bauteile der erfindungsgemäßen Vorrichtung deutlich reduzieren.

Ferner ist es denkbar, dass die Kameraeinheit beweglich an einem Schlitten im Gehäuse gehalten ist, wobei der Schlitten einerseits als Antriebshebel für das Verschlusselement dient und andererseits vom Verbindungselement antreibbar ist. Der als Antriebshebel ausgestaltete Schlitten stellt somit einen Teil der Antriebsmechanik für das Verschlusselement dar. Auch ist es denkbar, dass der Schlitten die Kameraeinheit vollumfänglich umfasst, wobei die Kameraeinheit formschlüssig, insbesondere durch ein Rasthaltemittel, im Schlitten gesichert ist. Die Rasthaltemittel können hierbei insbesondere als Clipsverbindungen ausgestaltet sein, so dass eine einfache Montage der Kameraeinheit an dem Schlitten ermöglicht wird, da z. B. ein Clips von dem Schlitten hinter eine Kante der Kameraeinheit greifen kann. Ferner ist die Kameraeinheit quasi im Schlitten angeordnet, so dass ein besonders sicherer Halt ermöglicht wird, wodurch störende Einflüsse, wie z. B. Vibrationen, bei der Bilderfassung der Kameraeinheit weitestgehend vermieden werden können. Der Schlitten kann selbst einerseits mit dem Verschlusselement verbunden sein und andererseits mit dem Verbindungselement, welches weiter mit der Antriebseinheit verbunden ist. Folglich kann das Verschlusselement indirekt über die Antriebsmechanik durch die Antriebseinheit angetrieben werden, wobei der Schlitten für die Kameraeinheit ein Übertragungselement darstellt. Der Schlitten kann zu diesem Zweck drehbar an dem Verschlusselement angeordnet sein, wobei insbesondere nur eine Drehachse zum Einsatz kommt, und die Kameraeinheit zwischen zwei festen Drehpunkten der Drehachse angeordnet ist, um eine Bilderfassung zu ermöglichen. Durch die beidseitige Lagerung des Schlittens an den beiden Drehpunkten an dem Verschlusselement kann ebenfalls die Stabilität der gesamten Antriebsmechanik für die Kameraeinheit erhöht werden. Das Verschlusselement selbst kann über eine Lagerwelle drehbar an dem Trägerelement, insbesondere im Bereich der Gehäuseöffnung, gelagert sein. Hierbei vollzieht das Verschlusselement ausschließlich eine Drehung um die zuvor erwähnte Lagerwelle. Gleichzeitig wird bei dieser Drehbewegung auch der Kameraschlitten mit der Kameraeinheit an der erfindungsgemäßen Vorrichtung bewegt, um die Kameraeinheit in ihre Bilderfassungsposition überführen zu können.

Im Rahmen der vorliegenden Erfindung kann es auch vorgesehen sein, dass die Kameraeinheit und/oder das Verschlusselement zumindest in den beiden Endstellungen I, II form- und/oder kraftschlüssig fixiert sind. Durch die zusätzliche form- und/oder kraftschlüssige Fixierung der Kameraeinheit und/oder dem Verschlusselement wird sichergestellt, dass einerseits ein einfaches Aufhebeln des Verschlusselements in der Schließstellung I unmöglich ist und andererseits die Kameraeinheit in der Offenstellung II des Verschlusselements zusätzlich gegen mechanische Vibrationen gesichert ist.

Des Weiteren wird die zuvor genannte Aufgabe auch durch ein Verfahren zum Betrieb einer Vorrichtung mit einer Kameraeinheit und mit einer Bedieneinheit durch die Merkmale des Patentanspruchs 12 gelöst.

Bei dem erfindungsgemäßen Verfahren kommt eine Vorrichtung, insbesondere für eine Heckklappe eines Fahrzeugs, zum Einsatz mit einer Kameraeinheit, die zur Bilderfassung des Außenbereichs des Fahrzeugs dient, und mit einer Bedieneinheit, die zur Bedienung eines Fahrzeugteils, wie z. B. einem elektrischen Schloss für eine Heckklappe, dient, wobei die Kameraeinheit und die Bedieneinheit insbesondere nebeneinander mittels eines Trägerelements am Fahrzeug angeordnet sind, und zumindest die Kameraeinheit in einem geschützten Gehäuse untergebracht ist, und ein bewegliches Verschlusselement zum Verschließen einer Gehäuseöffnung vorhanden ist, welches durch eine Antriebseinheit in zumindest zwei Endstellungen I, II, nämlich eine Schließstellung I und eine Offenstellung II, bewegbar ist. Bei dieser Vorrichtung kann es sich auch um die zuvor beschriebene erfindungsgemäße Vorrichtung handeln.

Ferner ist es bei dem Verfahren erfindungsgemäß vorgesehen, dass in einem ersten Montageschritt ein Teil der Vorrichtung von außen, gemeint ist von einer Außenseite, durch einen Durchbruch insbesondere in einem Karosserieteil vom Fahrzeug montiert wird, und dass in einem weiteren Montageschritt der übrige Teil der Vorrichtung von innen, gemeint ist von der anderen Seite, d. h. Innenseite, montiert wird, wobei das Gehäuse für die Kameraeinheit durch ein Zusammenfügen der beiden Teile gebildet wird. Somit ist es möglich, die Vorrichtung auch durch sehr kleine Durchbrüche am Fahrzeug zu montieren, da die Vorrichtung zweigeteilt ist. Folglich kann die fertig montierte Vorrichtung optimal an den vorhandenen Bauraum angepasst werden. Somit ist selbst der Einsatz der erfindungsgemäßen Vorrichtung bei einem kritischen Bauraum denkbar. Insbesondere die zweiseitige Montage der Vorrichtung von außen und innen ermöglicht eine optimale Anpassung an den vorhandenen Bauraum für die Vorrichtung. Selbstverständlich muss hierbei das Zusammenfügen der beiden Teile möglichst einfach vonstattengehen, da ansonsten die benötigte Montagezeit und damit die Kosten unnötig steigen.

Bei dem erfindungsgemäßen Verfahren ist es vorgesehen, dass wenigstens das Gehäuse zumindest zweiteilig aufgebaut ist, wobei das Trägerelement ein erstes Gehäuseteil bildet, an dem die Bedieneinheit und die Kameraeinheit angeordnet sind, und das Trägerteil von außen durch den Durchbruch am Fahrzeug im ersten Montageschritt montiert wird. In einem weiteren Montageschritt werden die beiden Gehäusehälften zusammengefügt, wobei die Antriebseinheit an dem zweiten Gehäuseteil angeordnet ist. Somit wird nicht nur einfach ein Deckel als zweites Gehäuseteil auf das erste Gehäuseteil aufgeschoben, sondern das zweite Gehäuseteil weist selbst wesentliche Bauteile der Vorrichtung zusätzlich zum Gehäuse auf. Hierbei ist es auch denkbar, dass die Kameraeinheit nicht am ersten Gehäuseteil, sondern am zweiten Gehäuseteil angeordnet ist, und beim Zusammenfügen der beiden Gehäuseteile im verschließbaren Gehäuse angeordnet wird. Selbst die Bedieneinheit kann nach dem ersten Montageschritt im weiteren Montageschritt erst mit dem Trägerelement verbunden werden. Beim Zusammenfügen der beiden Gehäuseteile kann gleichzeitig eine elektrische Leitung für die Kameraeinheit mit dieser verbunden werden, welche über eine Öffnung aus dem Gehäuse mit der übrigen Fahrzeugelektronik verbindbar ist. Um der elektrischen Anschlussleitung genügend Bewegungsfreiraum im Gehäuse zu verschaffen, kann diese über eine Balgendichtung am Gehäuse abgedichtet werden, die mit einer größeren Öffnung im Gehäuse korrespondiert.

Des Weiteren kann es bei dem erfindungsgemäßen Verfahren vorgesehen sein, dass die Vorrichtung über zumindest ein Befestigungselement, insbesondere einen Befestigungsbügel, am Fahrzeug gehalten wird. Hierbei kann insbesondere das Befestigungselement die Vorrichtung zumindest formschlüssig halten und das Befestigungselement zur Befestigung der Vorrichtung nur aufgeschoben werden. Somit ist eine werkzeuglose Montage der gesamten Vorrichtung am Fahrzeug möglich. Nach dem ersten Montageschritt, nämlich der teilweise Durchführung der Vorrichtung von außen durch den Durchbruch am Fahrzeug, können die weiteren Montageschritte ausgeführt werden, wobei die weitere Reihenfolge variabel ist. So kann als nächster Montageschritt zunächst die Vorrichtung bzw. das Gehäuse zusammengefügt werden und anschließend die Befestigung der Vorrichtung am Fahrzeug vorgenommen werden. Auch ist es denkbar, dass zunächst die Befestigung des ersten Teils der Vorrichtung am Fahrzeug vorgenommen wird und anschließend erst das Zusammenfügen der beiden Vorrichtungsteile. Auch ist es denkbar, dass beim ersten Montageschritt bereits eine Befestigung der Vorrichtung am Fahrzeug erfolgt, wenn hierbei entsprechende Rastverbindungen zum Einsatz kommen. In diesem Fall kann auf eine zusätzliche Befestigung der Vorrichtung über ein weiteres Befestigungselement, insbesondere in Form eines Befestigungsbügels, verzichtet werden.

Weitere Vorteile, Merkmale und Einzelheiten der Erfindung ergeben sich aus der nachfolgenden Beschreibung, in der unter Bezugnahme auf die Zeichnungen die Erfindung dargestellt ist. Dabei können die in den Ansprüchen und in der Beschreibung erwähnten Merkmale für die erfindungsgemäße Vorrichtung und das erfindungsgemäße Verfahren einzeln für sich oder in beliebiger Kombination erfindungswesentlich sein. Es zeigen:
- Figur 1: eine dreidimensionale Ansicht der erfindungsgemäßen Vorrichtung in Schließstellung I des Verschlusselements,
- Figur 2: eine dreidimensionale Ansicht der Vorrichtung aus Figur 1, jedoch in Offenstellung II des Verschlusselements,
- Figur 3: eine Explosionsansicht der erfindungsgemäßen Vorrichtung mit allen wesentlichen Bauteilen,
- Figur 4: einen Querschnitt durch eine montierte erfindungsgemäße Vorrichtung in Offenstellung II des Verschlusselements,
- Figur 5: einen Querschnitt durch die Vorrichtung aus Figur 4, jedoch in einer Zwischenstellung des Verschlusselements,
- Figur 6: einen Querschnitt durch die Vorrichtung aus den Figuren 4 und 5, jedoch in Schließstellung I des Verschlusselements,
- Figur 7a: eine dreidimensionale Ansicht der Vorrichtung während des ersten Montageschritts,
- Figur 7b: eine dreidimensionale Ansicht der Vorrichtung aus Figur 7a im weiteren Montageschritt,
- Figur 7c: eine dreidimensionale Ansicht der Vorrichtung in einem zusätzlichen Montageschritt, in dem die Gehäuseteile zusammengefügt werden, und
- Figur 8: eine Schnittansicht durch den Verbindungsbereich zwischen dem Fahrzeug bzw. Karosserieteil und der Vorrichtung sowie dem Verschlusselement.

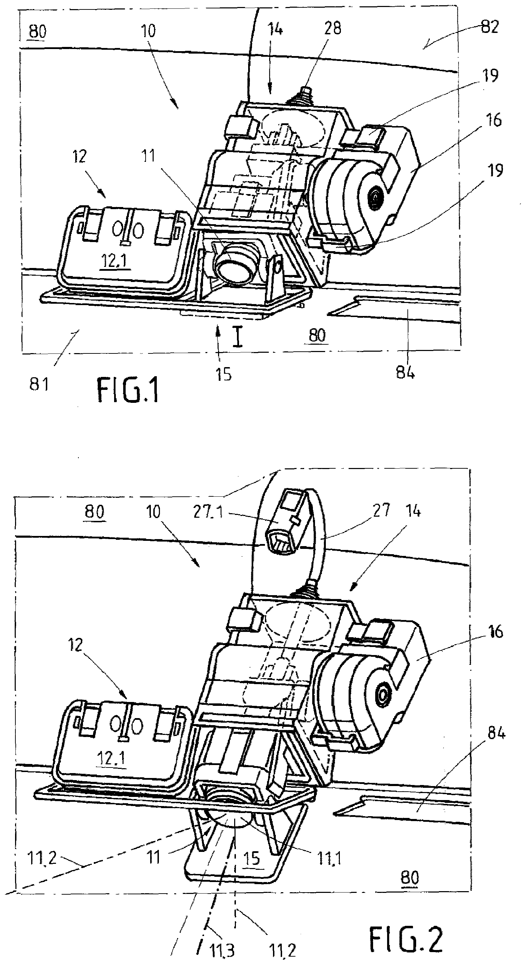

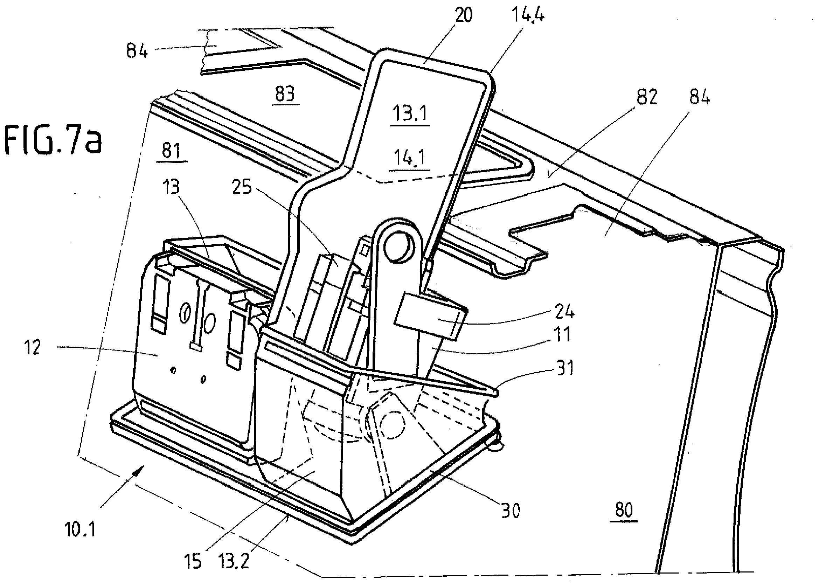

In der Figur 1 und 2 ist die erfindungsgemäße Vorrichtung 10 in ihrer montierten Lage an einem Karosserieteil 80 eines Fahrzeuges dargestellt, wobei dieses Karosserieteil 80, insbesondere durch eine Heckklappe, gebildet wird. Links und rechts (aus Sicht der Fig. 1 u. 2) neben der Vorrichtung 10 sind die Öffnungen 84 für eine Nummernschildbeleuchtung des Fahrzeugs erkennbar, die neben dem Durchbruch 83 für die Vorrichtung 10 angeordnet sind (s. hierzu auch Figur 7a). In der Figur 1 ist die Vorrichtung 10 mit ihren sämtlichen Bauteilen dargestellt. Dabei ist ein Bedienteil 12 links neben einer Kameraeinheit 11 an einem Trägerelement 13 der erfindungsgemäßen Vorrichtung 10 angeordnet. Die Kameraeinheit 11 ist selbst vor Umwelteinflüssen geschützt in einem Gehäuse 14 angeordnet, wobei eine elektrische Leitung 27 für die Kameraeinheit 11 mittels einer Balgendichtung 28 aus dem Gehäuse 14 wasserdicht herausgeführt wird. Die elektrische Leitung 27 weist einen ersten Stecker 27.1 auf, der dazu dient, die Kameraeinheit 12 fahrzeugseitig zu verbinden. Ein zweiter Stecker 27.2 ist am gegenüberliegenden Ende der elektrischen Leitung 27 angeordnet, um die Kameraeinheit 11 mit der elektrischen Leitung 27 zu verbinden. Die zuvor erwähnte Balgendichtung 28 dient dazu, das Gehäuse 14 auch bei größeren Bewegungen der elektrischen Leitung 27 sicher gegen äußere Umwelteinflüsse abzudichten.

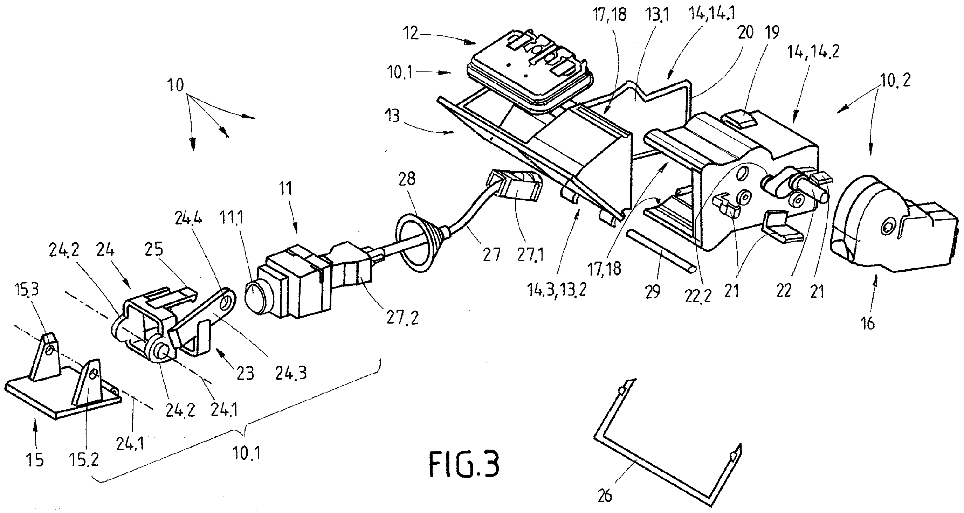

In der Figur 1 und 2 ist die Vorrichtung 10 aus der gleichen Perspektive dargestellt, wobei nur die Rückseite 12.1 der Bedieneinheit 12 zu erkennen ist. Die Bedieneinheit 12 ist manuell, z. B. durch die Hand eines Benutzers bedienbar, wozu in dem Trägerelement 13 eine Trägeröffnung 13.5 vorgesehen ist, durch die der Bediener greifen kann, um die Bedieneinheit 12 zu erreichen. Rechts neben der Bedieneinheit 12 ist das Gehäuse 14 für die Kameraeinheit 11 am Trägerelement 13 angeordnet. Damit die Kameraeinheit 11 eine Bilderfassung vornehmen kann, ist zusätzlich eine Gehäuseöffnung 14.3 rechts neben der Trägeröffnung 13.5 vorgesehen. Die Gehäuseöffnung 14.3 ist durch ein bewegliches Verschlusselement 15 zwischen einer Schließstellung I und einer Offenstellung II bewegbar. In der Figur 1 ist das Verschlusselement 15 in der Schließstellung I dargestellt, so dass die Kamera insgesamt geschützt in dem Gehäuse 14 untergebracht ist. Die Verstellung des Verschlusselements 15 zwischen den Endpositionen I, II erfolgt durch eine Antriebseinheit 16 und zwar indirekt über ein Verbindungselement 22 und eine Antriebsmechanik 23. Die Antriebseinheit 16 ist selbst an einer Außenwand des Gehäuses 14 über Rastverbindungen 19 orts- und drehmomentfest angeordnet. Zur Unterstützung sind an der Außenwand des Gehäuses 14 auch zwei kreisförmige Nocken angeordnet, um eine drehmomentsichere Fixierung der Antriebseinheit 16 an dem Trägerelement 13 bzw. der Vorrichtung 10 zu bewirken (dargestellt in Figur 3).

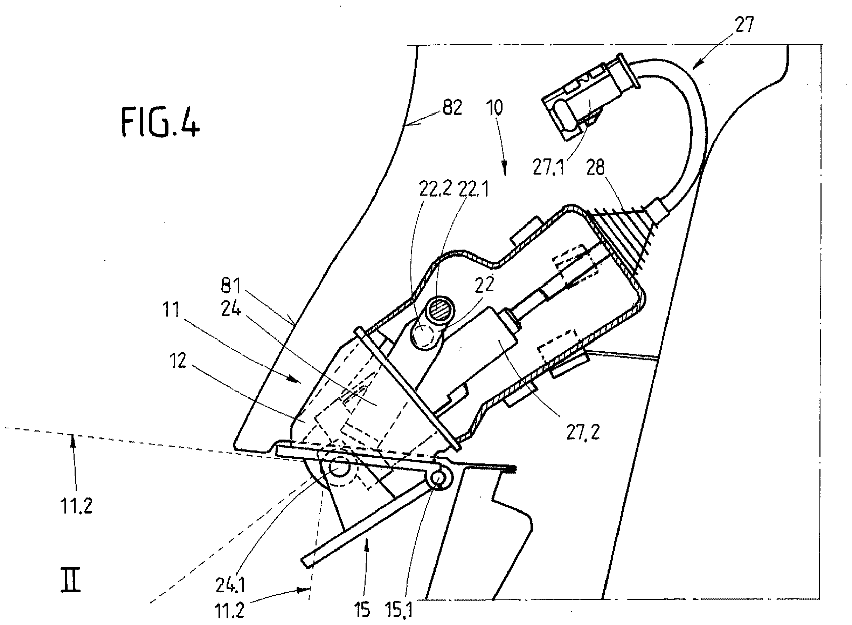

In der weiteren Figur 2 ist die Kameraeinheit 11 in ihrer Betriebsstellung dargestellt, wozu das Verschlusselement 15 in der Offenstellung II angeordnet ist. Somit gibt das Verschlusselement 15 die Gehäuseöffnung 14.3 zur Bilderfassung der Kameraeinheit 11 frei. Ein Aufnahmebereich 11.2 von der Kameralinse 11.1 ist in Figur 2 als Aufnahmekegel dargestellt. Hierbei ist der Aufnahmebereich 11.2 so ausgerichtet, dass er einerseits noch eine Fahrzeugkante erfasst und andererseits über den natürlichen Horizont gerichtet ist. Somit erhält der Fahrer eines Fahrzeuges bei dem erfassten Bild auch Informationen zur Rückansicht in Bezug auf die konkrete Anordnung des Fahrzeugs. Der Aufnahmebereich 11.2 ist hierbei in der Figur 4 in Seitenansicht dargestellt.

In der Figur 3 ist die Vorrichtung 10 aus den Figuren 1 und 2 im nicht montierten Zustand in einer Explosionsansicht dargestellt. Dabei dient das Trägerelement 13 zur Aufnahme und Befestigung der Bedieneinheit 12 und der Kameraeinheit 11, die in dem zweiteiligen Gehäuse 14 angeordnet ist. Auch die übrigen Bauteile der Vorrichtung 10 sind direkt oder indirekt mit dem Trägerelement 13 verbunden. Hierzu zählt z. B. die Antriebseinheit 16, die über das Gehäuse 14 mit dem Trägerelement 13 verbunden ist. Die bewegliche Kameraeinheit 11 ist über einen Schlitten 24 mit dem Verschlusselement 15 verbunden, wobei der Schlitten 24 einen Teil der Antriebsmechanik 23 bildet. Zur Befestigung der Kameraeinheit 11 am Schlitten 24 ist ein Rasthaltemittel 25 in Form eines herausragenden Clipselementes angeordnet. Der Schlitten 24 umfasst die Kameraeinheit 11 vollumfänglich, so dass ein sicherer Halt gewährleistet ist. Die Linse 11.1 der Kameraeinheit 11 ragt zwischen zwei Drehpunkten 24.2 des Schlittens 24 heraus, die dazu dienen, den Schlitten 24 über ein feste Drehachse 24.1 mit dem Verschlusselement 15 zu verbinden. Zu diesem Zweck sind am Verbindungselement 15 zwei parallele Lagerarme 15.2 angeordnet, die aus der Innenseite des Verschlusselements 15 herausragen und endseitig jeweils mit einer Öffnung 15.3 für die Drehpunkte 14.2 des Schlittens 24 versehen sind. Um den Zusammenbau der Vorrichtung 10 zu vereinfachen, sind die Lagerarme 15.2 an ihren äußeren Enden abgeflacht, so dass die Drehpunkte 24.2 des Schlittens 24 die Lagerarme 15.2 beim Zusammenbauen leicht wegdrücken können, damit anschließend eine formschlüssige aber drehbare Verbindung zwischen dem Schlitten 24 und dem Verschlusselement 15 erreichbar ist. Zu diesem Zweck sind die Lagerarme 15.2 leicht federnd ausgestaltet. Das Verschlusselement 15 weist ferner eine feste Drehachse 15.1 zum Trägerelement 13 auf, die durch die Lagerwelle 29 gebildet wird. Durch eine Bewegung des Schlittens 24 wird das Verschlusselement 15 zwischen seinen beiden Endpositionen I, II hin und her gedreht. Der Schlitten 24 weist ferner einen Antriebshebel 24.3 auf, der im zusammengebauten Zustand der Vorrichtung mit dem Verbindungselement 22 mechanisch zusammenwirkt, wozu eine Öffnung 24.4 im Antriebshebel 24.3 vorgesehen ist, in die ein exzentrisch angeordneter Nocken 22.2 des Verbindungselements 22 formschlüssig eingreift. Das Verbindungselement 22 ist einerseits mit dem Schlitten 24, insbesondere dem Antriebshebel 24.3 verbunden und andererseits mit der Antriebseinheit 16, die für eine Drehung des Verbindungselements 22 sorgt. Über die eingeleitete Drehbewegung der Antriebseinheit 16 lässt sich somit indirekt die Kameraeinheit 11 im Schlitten 24 und das Verschlusselement 15 bewegen. Es sei an dieser Stelle erwähnt, dass das Verschlusselement 15 nicht nur die Gehäuseöffnung 14.3 verschließen kann, sondern auch die bereits erwähnte Trägeröffnung 13.5 für die Bedieneinheit 12. Auch kann die Bedieneinheit 12 innerhalb des Gehäuses 14 angeordnet sein, genauso wie die Antriebseinheit 16. Im vorliegenden Fall ist jedoch die Bedieneinheit 12, genauso wie die Antriebseinheit 16 außerhalb des Gehäuses 14 direkt bzw. indirekt mit dem Trägerelement 13 verbunden.

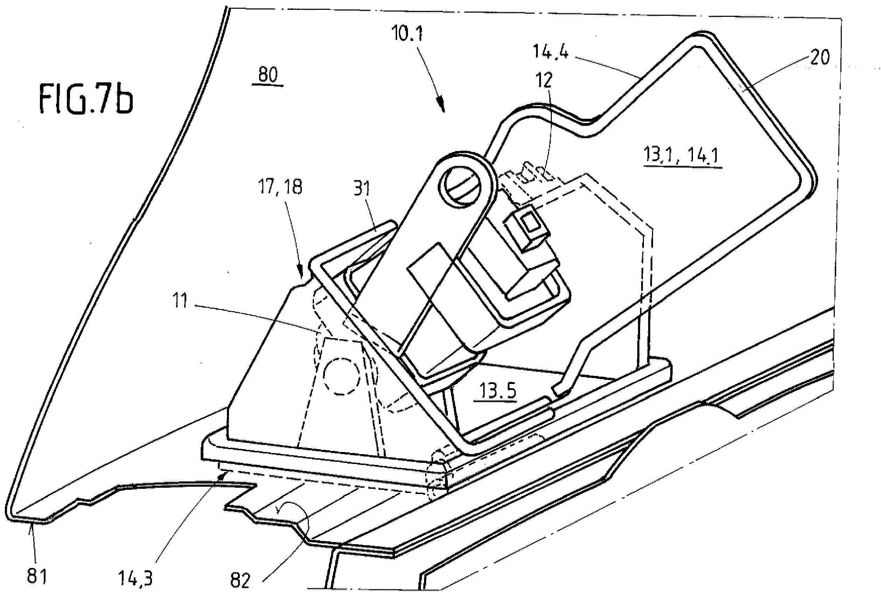

Das zweiteilige Gehäuse 14 wird durch das erste Gehäuseteil 14.1 gebildet, welches als erste, flache Gehäusewand 13.1 rückseitig aus dem Trägerelement 13 herausragt. Entlang der Gehäusewandkante 13.1 kann zusätzlich das dargestellte Dichtungselement 20 angeordnet sein, um eine besonders gute Abdichtung des Gehäuses 14 zu bewirken. Das zweite Gehäuseteil 24.2 stellt einen zweiten Teil 10.2 der Vorrichtung 10 dar, der nach dem ersten Montageschritt des ersten Teils 10.1 der Vorrichtung 10 am Karosserieteil 80 damit zusammengefügt wird. Zwischen den beiden Gehäuseteilen 14.1, 14.2 ist eine Linearführung 17 vorgesehen, wodurch das zweite Gehäuseteil 14.2 seitlich (gemeint ist im Wesentlichen orthogonal zur Bewegungsrichtung 11.3 der Kameraeinheit 11) auf das erste Gehäuseteil 14.1 aufgeschoben wird. Die Linearführung 17 bildet gleichzeitig eine Labyrinthdichtung 18, wodurch auch diese Verbindungskante 14.4 des Gehäuses 14 gut abgedichtet wird. Zusätzlich kann die in den Figuren 7a, b dargestellte Zusatzdichtung 31 in dem Bereich der Linearführung 17 verwendet werden.

Wie in der Figur 3 gut ersichtlich ist, wird die Antriebseinheit 16 über die Rastverbindungsmittel 21 von außen an dem zweiten Gehäuseteil 14.2 formschlüssig gehalten. Das Verbindungselement 22 ragt von der Innenseite des zweiten Gehäuseteils in die Antriebseinheit 16 hinein. Damit die beiden Gehäuseteile 14.1 und 14.2 sicher miteinander verbunden werden können, sind die Rastverbindungen 19 vorgesehen, die oben, unten und/oder seitlich an der äußeren Gehäusewand angeordnet sein können, um mit dem ersten Gehäuseteil 14.1 zusammenwirken zu können.

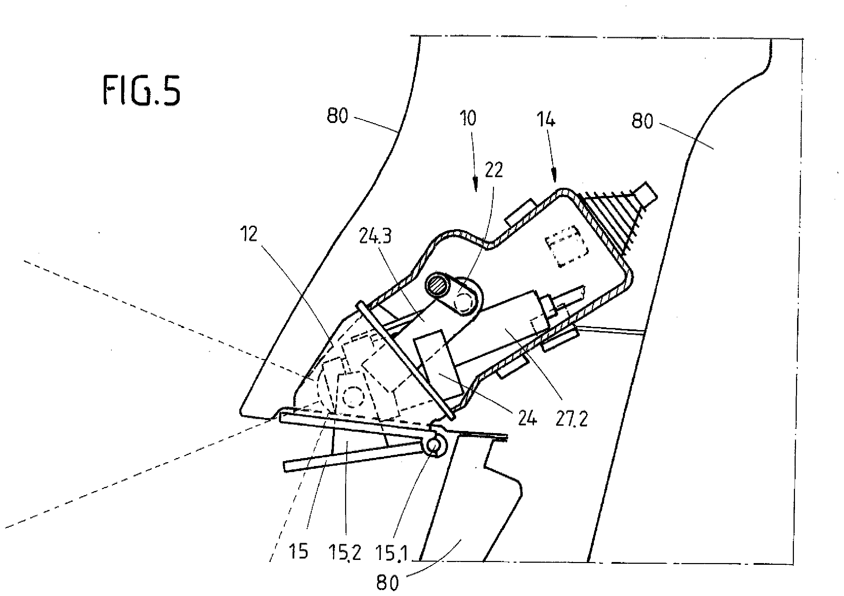

In der weiteren Figur 4 ist ein Querschnitt durch die montierte Vorrichtung 10 dargestellt, wobei sich das Verschlusselement 15 in seiner Offenstellung II befindet und die Kameraeinheit 11 eine Bilderfassung vornehmen kann. Der dargestellte Schnitt in Figur 4 verläuft im Gehäuse 14 parallel zur seitlichen Außenwand, an der die Antriebseinheit 16 angeordnet ist, wobei der Schnitt durch das Verbindungselement 22 verläuft. Das Verschlusselement 15 wird über die feste Drehachse 15.1 am Trägerelement 13, insbesondere mittels der Lagerwelle 29, gelagert. In dieser Betriebsstellung der Kameraeinheit 11 ist diese mehr oder weniger mittig im Gehäuse 14 gelagert, so dass der Abstand des zweiten Steckers 27.2 zu den Gehäusewänden ungefähr gleich groß ausgestaltet ist. Die Drehachse 22.1 des Verbindungselements 22 ist durch die Antriebseinheit 16 fest vorgegeben, wobei der exzentrische Nocken 22.2 am Verbindungselement 22 mit dem Schlitten 24 zusammenwirkt und für eine Bewegung der Kameraeinheit 11 und des Verschlusselements 15 sorgt. Hierzu wird das Verbindungselement 22 um seine feste Drehachse 22.1 im Gegenuhrzeigersinn gedreht, um das Verschlusselement von seiner Offenstellung II in seine Schließstellung I zu bewegen. In der Figur 5 ist eine Zwischenstellung der Kameraeinheit 11 und dem Verschlusselement 15 dargestellt. Dabei wurde das Verbindungselement 22 im Gegenuhrzeigersinn um ca. 90° um die Drehachse 22.1 gedreht, wodurch der Schlitten 24 weiter in das Gehäuseinnere hineingezogen worden ist. In dieser Zwischenstellung berührt der zweite Stecker 27.2 fast die Gehäuseinnenwand des Gehäuses 14. Da der Schlitten 24 über die beiden Drehpunkte 24.2 mit dem Lagerarmen 15.2 des Verschlusselements 15 verbunden ist, wird das Verschlusselement 15 ebenfalls an das Trägerelement 13 heran gedreht.

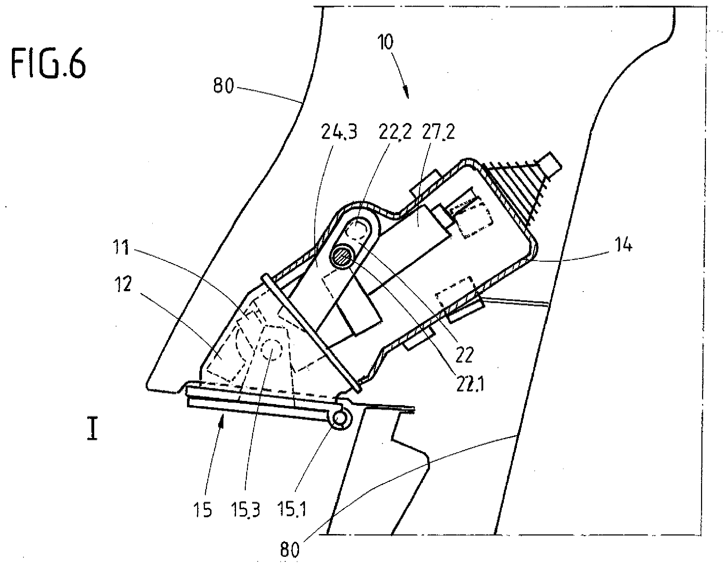

In der weiteren Figur 6 ist nunmehr die Kameraeinheit 11 in ihrer Ruhestellung sowie das Verschlusselement 15 in der Schließstellung I gezeigt. Dabei ist die Kameraeinheit 11 maximal in das Gehäuse 14 hereingezogen worden und das Verschlusselement 15 verschließt sicher die Gehäuseöffnung 14.3. In dieser Stellung berührt der zweite Stecker 27.2 nunmehr die gegenüberliegende Gehäuseinnenwand (im Vergleich zur Zwischenstellung aus Fig. 5). Ebenfalls liegt der Antriebshebel 24.3 vom Schlitten 24 fast an der gleichen Gehäuseinnenwand an. Das Verbindungselement 22 wird um ca. 180° von der Antriebseinheit 16 um die Drehachse 22.1 gedreht, um das Verschlusselement 15 von seiner Schließstellung I in seine Offenstellung II und umgekehrt zu überführen. Aus der dargestellten Schließstellung I in Figur 6 lässt sich die Kameraeinheit 11 nur durch eine im Uhrzeigersinn ausgeführte Drehung des Verbindungselements 22 bewegen. Es sei an dieser Stelle erwähnt, dass das Verschlusselement 15, der Schlitten 24 und/oder die Kameraeinheit 11 in den Endpositionen I, II zusätzlich form- und/oder kraftschlüssig gesichert werden können.

In den weiteren Figuren 7a bis 7c ist die Montage der erfindungsgemäßen Vorrichtung 10 am Fahrzeug in den einzelnen Montageschritten dargestellt.

In der Figur 7a wird gezeigt, wie ein erster Teil 10.1 der Vorrichtung 10 von außen durch den Durchbruch 83 im Karosserieteil 80 hindurchgeführt wird, wobei ebenfalls die Öffnungen 84 für die Nummernschildbeleuchtung links und rechts neben dem Durchbruch 83 zu erkennen sind. Dabei fehlt der Vorrichtung 10 der zweite Teil 10.2, da dieser nicht durch den Durchbruch 83 passen würde. Der zweite Teil 10.2 ist im vorliegenden Beispiel durch das zweite Gehäuseteil 14.2 gebildet, an dem zusätzlich die Antriebseinheit 16 sowie das Verbindungselement 22 vormontiert sind. Wie gut zu erkennen ist, sind am ersten Teil 10.1 der Vorrichtung 10 bereits die Bedieneinheit 12 sowie die Kameraeinheit 11 im Schlitten 24 und das Verschlusselement 15 angeordnet. Zur flächenbündigen Befestigung der Vorrichtung 10 ist um den rechtwinkligen Durchbruch 83 eine Vertiefung im Karosserieteil 80 gebildet, die mit dem Rand des Trägerelements 13 zusammenwirkt, wobei an der Innenseite des Trägerelements 13 zusätzlich die Dichtung 30 vorgesehen ist, die mit dem vertieften Rand des Durchbruchs 83 zusammenwirkt.

In einem weiteren Montageschritt wird die Vorrichtung 10 entweder vervollständigt oder zunächst am Karosserieteil 80 befestigt. Hierzu kann ein Befestigungselement 26 verwendet werden, welches in Figur 3 dargestellt ist. Dieses Befestigungselement 26 kann bügelartig ausgestaltet sein und zwischen einem Vorsprung am Trägerelement 13 und der Innenseite 82 des Karosserieteils 80 entlang geführt werden, so dass die Vorrichtung 10 formschlüssig durch das bügelartige Befestigungselement 26 gehalten wird. Selbstverständlich sind auch andere Befestigungselemente 26 denkbar, wie z. B. widerhakenförmige, insbesondere kegelförmige, Rastelemente, die mit entsprechenden Durchbrüchen im Karosserieteil 80 zusammenwirken oder Schrauben oder dergleichen.

In der Figur 7b ist der erste Teil 10.1 der Vorrichtung 10 an dem Karosserieteil 80 angeordnet. Dabei fehlt der Vorrichtung 10 der zweite Teil 10.2 der Vorrichtung 10. Dieser wird unter anderem durch das zweite Gehäuseteil 14.2 gebildet. Damit die Antriebseinheit 16 leicht mit der Antriebsmechanik 23 bzw. dem Schlitten 24 verbunden werden kann, ist diese in einer Montagestellung angeordnet, wozu Montagehilfen vorgesehen sein können. Ebenfalls ist die Antriebseinheit 16 sowie das Verbindungselement 22 in einer korrespondierenden Montagestellung am zweiten Gehäuseteil 14.2 angeordnet, wozu ebenfalls eine Montagehilfe vorgesehen sein kann. In der Position der erfindungsgemäßen Vorrichtung 10 aus Figur 7b braucht nur das zweite Gehäuseteil 14.2 über die Linearführung 17 auf das erste Gehäuseteil 14.1 aufgeschoben werden, wobei automatisch eine Verbindung zwischen dem Schlitten 24 und dem Verbindungselement 22 erfolgt, da sich diese beiden Teile 22, 24 in der Montageposition befinden. Hierbei greift der exzentrische Nocken 22.2 des Verbindungs-elements 22 formschlüssig in die Öffnung 24.2 vom Antriebshebel 24.3 des Schlittens 24 ein.

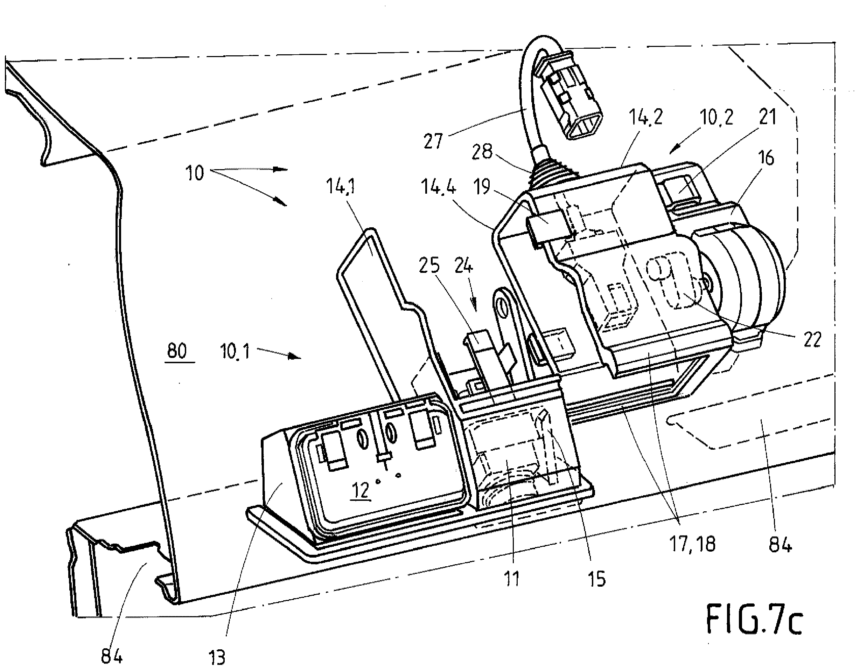

In der Figur 7c ist das Zusammenfügen der beiden Teile 10.1 und 10.2 der Vorrichtung 10 bzw. der beiden Gehäuseteile 14.1 und 14.2 angedeutet. Die Verbindung des Gehäuses 14 erfolgt nur über das seitliche Aufschieben des zweiten Gehäuseteils 14.2 an das erste Gehäuseteil 14.1 bzw. das Trägerelement 13. Anschließend sind gegebenenfalls die Montagehilfen für den Schlitten 24 und das Verbindungselement 22 zu Entfernen und die Montage der Vorrichtung 10 am Karosserieteil 80 ist fertig gestellt. Da die beiden Gehäuseteile 14.1 und 14.2 über die Rastverbindungen 19 formschlüssig miteinander verbunden sind, muss keine weitere Halterung oder Verbindung des Gehäuses 14 vorgenommen werden. Anschließend muss die Vorrichtung 10 nur noch elektrisch mit der übrigen Fahrzeugelektronik verbunden werden, wozu unterschiedliche elektrische Stecker für die jeweiligen Bauteile 11, 12, 16 vorgesehen sein können.

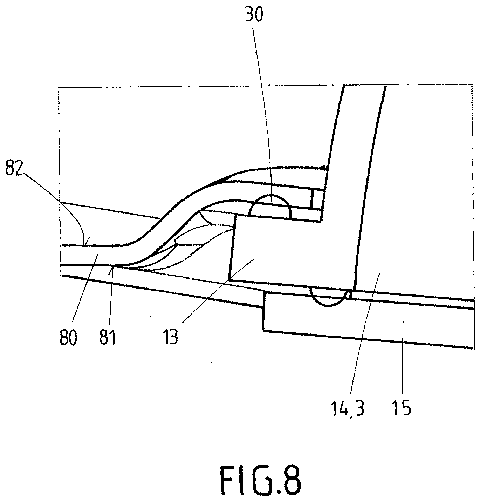

In der Figur 8 ist eine denkbare Abdichtung der erfindungsgemäßen Vorrichtung 10 am Karosserieteil 80 in einer Schnittdarstellung gezeigt. Hierzu können diverse Dichtungselemente einerseits an der Kante für den Durchbruch 83 angeordnet sein und/oder an der umlaufenden Kante von dem Trägerelement 13. In der Figur 8 ist dargestellt, wie die entgegengesetzt angeordneten Dichtungen zwischen dem Karosserieteil 80 und dem Trägerelement 13 gleichzeitig eine Labyrinthdichtung bilden. Ebenfalls ist eine Dichtung zwischen dem Trägerelement 13 und dem Verschlusselement 15 angeordnet, um das Gehäuse 14 bestmöglich abzudichten.

### Bezugszeichenliste

- 10: Vorrichtung
- 10.1: erstes Teil
- 10.2: zweites Teil
- 11: Kameraeinheit
- 11.1: Linsen
- 11.2: Aufnahmebereich
- 11.3: Bewegungsrichtung
- 12: Bedieneinheit
- 12.1: Rückseite
- 13: Trägerelement
- 13.1: erste Gehäusewand von 14.1
- 13.2: zweite Gehäusewand von 14.1
- 13.5: Trägeröffnung für 12
- 14: Gehäuse
- 14.1: erstes Gehäuseteil
- 14.2: zweites Gehäuseteil
- 14.3: Gehäuseöffnung
- 14.4: Gehäusekante
- 14.5: Durchbruch für 22
- 15: Verschlusselement
- 15.1: Drehachse
- 15.2: Lagerarm
- 15.3: Öffnung für 24.2
- 16: Antriebseinheit
- 17: Linearführung
- 18: Labyrinthdichtung
- 19: Rastverbindung
- 20: Dichtungselement
- 21: Rastverbindungsmittel für 12, 16
- 22: Verbindungselement
- 22.1: Drehachse
- 22.2: Exzenternocken für 24
- 23: Antriebsmechanik
- 24: Schlitten (Antriebshebel für 15)
- 24.1: Drehachse
- 24.2: Drehpunkt
- 24.3: Antriebshebel
- 24.4: Öffnung für 22
- 25: Rasthaltemittel für 12
- 26: Befestigungselement
- 27: Elektrische Leitung für 11
- 27.1: erster Stecker
- 27.2: zweiter Stecker
- 28: Balgendichtung
- 29: Lagerwelle für 15
- 30: Dichtung für 13
- 31: Zusatzdichtung für 17, 18

- 80: Karosserieteil eines Fahrzeuges, insbesondere Heckklappe
- 81: Außenseite
- 82: Innenseite
- 83: Durchbruch für 10
- 84: Öffnungen für Nummerschildbeleuchtung

- I: Schließstellung
- II: Offenstellung

## Patentansprüche

1. Vorrichtung (10), insbesondere für eine Heckklappe (80) eines Fahrzeuges, mit einer Kameraeinheit (11), die zur Bilderfassung des Außenbereiches des Fahrzeuges dient, und mit einer Bedieneinheit (12), die zur Bedienung eines Fahrzeugteils dient, wobei
die Kameraeinheit (11) und die Bedieneinheit (12) insbesondere nebeneinander mittels eines Trägerelements (13) am Fahrzeug angeordnet sind, und
zumindest die Kameraeinheit (11) in einem Gehäuse (14) geschützt untergebracht ist, und
ein bewegliches Verschlusselement (15) zum Verschließen einer Gehäuseöffnung (14.3) vorhanden ist, welches durch eine Antriebseinheit (16) in zumindest zwei Endstellungen (I, II), nämlich einer Schließstellung (I) und einer Offenstellung (II) bewegbar ist,
wobei das Gehäuse (14) zumindest zweiteilig (14.1, 14.2) aufgebaut ist, wobei das Trägerelement (13) ein erstes Gehäuseteil (14.1) bildet, an dem die Bedieneinheit (12) und die Kameraeinheit (11) anordbar sind,
und die Antriebseinheit (16) an einem zweiten Gehäuseteil (14.2) anordbar ist,
**dadurch gekennzeichnet,**
**dass** eine Linearführung (17) zwischen dem ersten Gehäuseteil (14.1) bzw. dem Trägerelement (13) und dem zweiten Gehäuseteil (14.2) vorgesehen ist, um die beiden Gehäuseteile (14.1, 14.2) zu einem Gehäuse (14) zusammenzufügen, wobei das zweite Gehäuseteil (14.2) seitlich an das erste Gehäuseteil (14.1) schiebbar ist, und
**dass** eine Labyrinthdichtung (18) zwischen dem ersten Gehäuseteil (14.1) und dem zweiten Gehäuseteil (14.2) vorhanden ist, die durch die Linearführung (17) gebildet ist.

2. Vorrichtung (10) nach Anspruch 1,
**dadurch gekennzeichnet,**
**dass** die Gehäuseöffnung (14.3) zumindest für die Kameraeinheit (11) zur Bilderfassung des Außenbereiches eines Fahrzeuges dient und in dem ersten Gehäuseteil (14.1) vorhanden ist und
das bewegliche Verschlusselement (15) an dem ersten Gehäuseteil (14.1) angeordnet ist, wobei insbesondere das bewegliche Verschlusselement (15) eine feste Drehachse (15.1) aufweist.

3. Vorrichtung (10) nach einem der vorhergehenden Ansprüche,
**dadurch gekennzeichnet,**
**dass** die beiden Gehäuseteile (14.1, 14.2) über zumindest eine Rastverbindung (19) miteinander verbunden sind.

4. Vorrichtung (10) nach einem der vorhergehenden Ansprüche,
**dadurch gekennzeichnet,**
**dass** das Trägerelement (13) zumindest eine erste, flache Gehäusewand (13.1) des Gehäuses (14) bildet, an der insbesondere ein Dichtungselement (20) angeordnet ist, welches mit einer Gehäusekante (14.4) des zweiten Gehäuseteils (14.2) zusammenwirkt.

5. Vorrichtung (10) nach einem der vorhergehenden Ansprüche,
**dadurch gekennzeichnet,**
**dass** das Trägerelement (13) zwei Gehäusewände (13.1, 13.2) des Gehäuses (14) bildet, wobei die erste Gehäusewand (13.1) flach ausgestaltet ist und im Wesentlich orthogonal zur zweiten Gehäusewand (13.2) angeordnet ist, wobei die zweite Gehäusewand (13.2) die Gehäuseöffnung (14.3) aufweist.

6. Vorrichtung (10) nach einem der vorhergehenden Ansprüche,
**dadurch gekennzeichnet,**
**dass** die Bedieneinheit (12) und/oder die Antriebseinheit (16) außerhalb des Gehäuses (14), insbesondere über Ratsverbindungsmittel (21), angeordnet sind.

7. Vorrichtung (10) nach einem der vorhergehenden Ansprüche,
**dadurch gekennzeichnet,**
**dass** die Antriebseinheit (16) insbesondere von außen an dem zweiten Gehäuseteil (14.2) angeordnet ist und über zumindest ein Verbindungselement (22) das bewegliche Verschlusselement (15) antreibt, wobei insbesondere ein Durchbruch (14.5) in dem zweiten Gehäuseteil (14.2) für das Verbindungselement (22) vorhanden ist.

8. Vorrichtung (10) nach einem der vorhergehenden Ansprüche,
**dadurch gekennzeichnet,**
**dass** die Kameraeinheit (11) beweglich im Gehäuse (14) angeordnet ist, wobei sich die Kameraeinheit (11) in der Schließstellung (I) hinter dem Verschlusselement (15) im Gehäuse (14) befindet und in der Offenstellung (II) unverdeckt vom Verschlusselement (15) zur Bilderfassung positioniert ist,
wobei die Kameraeinheit (11) durch die Antriebseinheit (16) bewegbar ist, und insbesondere die Kameraeinheit (11) mit einer Antriebsmechanik (23) für das Verschlusselement (15) verbunden ist.

9. Vorrichtung (10) nach einem der vorhergehenden Ansprüche,
**dadurch gekennzeichnet,**
**dass** die Kameraeinheit (11) beweglich an einem Schlitten (24) im Gehäuse (14) gehalten ist, wobei der Schlitten (24) einerseits als Antriebshebel für das Verschlusselement (15) dient und andererseits vom Verbindungselement (22) antreibbar ist.

10. Vorrichtung (10) nach Anspruch 9,
**dadurch gekennzeichnet,**
**dass** der Schlitten (24) die Kameraeinheit (11) vollumfänglich umfasst und die Kameraeinheit (11) formschlüssig, insbesondere durch ein Rasthaltemittel (25), im Schlitten (24) gesichert ist.

11. Vorrichtung (10) nach einem der vorhergehenden Ansprüche,
**dadurch gekennzeichnet,**
**dass** die Kameraeinheit (11) und/oder das Verschlusselement (15) zumindest in den beiden Endstellungen (I, II) form- und/oder kraftschlüssig fixiert sind.

12. Verfahren zum Betrieb einer Vorrichtung (10), insbesondere für eine Heckklappe (80) eines Fahrzeuges, mit einer Kameraeinheit (11), die zur Bilderfassung des Außenbereiches des Fahrzeuges dient, und mit einer Bedieneinheit (12), die zur Bedienung eines Fahrzeugteils dient, wobei
die Kameraeinheit (11) und die Bedieneinheit (12) insbesondere nebeneinander mittels eines Trägerelements (13) am Fahrzeug angeordnet sind, und
zumindest die Kameraeinheit (11) in einem Gehäuse (14) geschützt untergebracht ist, und
ein bewegliches Verschlusselement (15) zum Verschließen einer Gehäuseöffnung (14.3) vorhanden ist, welches durch eine Antriebseinheit (16) in zumindest zwei Endstellungen (I, II), nämlich einer Schließstellung (I) und einer Offenstellung (II) bewegbar ist,
**dadurch gekennzeichnet,**
**dass** in einem ersten Montageschritt ein Teil (10.1) der Vorrichtung (10) von außen durch einen Durchbruch am Fahrzeug montiert wird, und
**dass** in einem weiteren Montageschritt der übrige Teil (10.2) der Vorrichtung (10) von innen montiert wird, wobei das Gehäuse (14) für die Kameraeinheit (11) durch ein Zusammenfügen der beiden Teile (10.1, 10.2) gebildet wird,
wobei das Gehäuse (14) zumindest zweiteilig (14.1, 14.2) aufgebaut ist, wobei das Trägerelement (13) ein erstes Gehäuseteil (14.1) bildet, an dem die Bedieneinheit (12) und die Kameraeinheit (11) angeordnet sind,
und die Antriebseinheit (16) an einem zweiten Gehäuseteil (14.2) angeordnet ist,
wobei eine Linearführung (17) zwischen dem ersten Gehäuseteil (14.1) bzw. dem Trägerelement (13) und dem zweiten Gehäuseteil (14.2) vorgesehen ist, um die beiden Gehäuseteile (14.1, 14.2) zu einem Gehäuse (14) zusammenzufügen, wobei das zweite Gehäuseteil (14.2) seitlich an das erste Gehäuseteil (14.1) geschoben wird,
und wobei eine Labyrinthdichtung (18) zwischen dem ersten Gehäuseteil (14.1) und dem zweiten Gehäuseteil (14.2) vorhanden ist, die durch die Linearführung (17) gebildet wird.

13. Verfahren nach Anspruch 12,
**dadurch gekennzeichnet,**
**dass** das Gehäuse (14) zumindest zweiteilig (14.1, 14.2) aufgebaut ist, wobei
das Trägerelement (13) ein erstes Gehäuseteil (14.1) bildet, an dem die Bedieneinheit (12) und die Kameraeinheit (11) angeordnet ist, und das Trägerteil (13) von außen durch den Durchbruch (83) am Fahrzeug im ersten Montageschritt montiert wird,
und die Antriebseinheit (16) an einem zweiten Gehäuseteil (14.2) angeordnet ist, wobei die beiden Gehäusehälften (14.1, 14.2) im weiteren Montageschritt zusammengefügt werden.

14. Verfahren nach Anspruch 12 oder 13,
**dadurch gekennzeichnet,**
**dass** die Vorrichtung (10) über zumindest ein Befestigungselement (26), insbesondere einen Befestigungsbügel (26), am Fahrzeug gehalten wird,
wobei insbesondere das Befestigungselement (26) die Vorrichtung (10) zumindest formschlüssig hält, und das Befestigungselement (26) zur Befestigung der Vorrichtung (10) nur aufgeschoben wird.

## Claims

1. A device (10), in particular for a tailgate (80) of a vehicle, with a camera unit (11) which serves for recording images of the exterior of the vehicle and with an operating unit (12) for operating a part of the vehicle, wherein
the camera unit (11) and the operating unit (12) are in particular arranged next to each other by way of a carrier element (13) on the vehicle, and,
at least the camera unit (11) is accommodated in a protected manner in a housing (14), and
a movable closing element (15) is present for closing a housing opening (14.3) which can be moved by means of an actuator unit (16) into at least two end settings (I, II), namely a closed setting (I) and an open setting (II),
wherein the housing (14) is structured in at least two sections (14.1, 14.2), wherein
the carrier element (13) forms a first housing section (14.1) on which the operating unit (12) and the camera unit (11) can be arranged,
and the actuator unit (16) can be arranged on a second housing section (14.2), **characterised in that**
a linear guide (17) is provided between the first housing section (14.1) and/or the carrier element (13) and the second housing section (14.2) in order to combine the two housing sections (14.1, 14.2) into one housing (14), wherein the second housing section (14.2) can be pushed laterally onto the first housing section (14.1), and
**in that** a labyrinth seal (18) is present between the first housing section (14.1) and the second housing section (14.2) which is formed by the linear guide (17).

2. The device (10) according to claim 1,
**characterised in that**
the housing opening (14.3) is used at least for the camera unit (11) for recording images of the exterior of a vehicle and is present in the first housing section (14.1) and
the movable closing element (15) is arranged on the first housing section (14.1), wherein in particular the movable closing element (15) comprises a fixed axis of rotation (15.1).

3. The device (10) according to any one of the preceding claims,
**characterised in that**
the two housing sections (14.1, 14.2) are connected to each other by means of at least one snap-in connection (19).

4. The device (10) according to any one of the preceding claims,
**characterised in that**
the carrier element (13) at least forms a first, flat housing wall (13.1) of the housing (14), on which, in particular, a sealing element (20) is arranged, which interacts with a housing edge (14.4) of the second housing section (14.2).

5. The device (10) according to any one of the preceding claims,
**characterised in that**
the carrier element (13) forms two housing walls (13.1, 13.2) of the housing (14), wherein the first housing wall (13.1) is flat and arranged essentially orthogonally with regard to the second housing wall (13.2), wherein the second housing wall (13.2) has the housing opening (14.3).

6. The device (10) according to any one of the preceding claims,
**characterised in that**
the operating unit (12) and/or the actuating unit (16) are arranged outside the housing (14), more particularly via snap connection means (21).

7. The device (10) according to any one of the preceding claims,
**characterised in that**
the actuating unit (16) is in particular arranged from outside on the second housing section (14.2) and actuates the moveable closing element (15) via at least one connection element (22), wherein, in particular, an aperture (14.5) is provided in the second housing section (14.2) for the connecting element (22).

8. The device (10) according to any one of the preceding claims,
**characterised in that**
the camera unit (11) is arranged moveably in the housing (14), wherein in the closed setting (I) the camera unit (11) is located behind the closing element (15) in the housing (14) and in the open setting (II), the camera unit (11) is positioned for image recording, uncovered by the closing element (15),
wherein the camera unit (11) can be moved by means of the actuating unit (16), and,
in particular, the camera unit (11) is connected with an actuating mechanism (23) for the closing element (15).

9. The device (10) according to any one of the preceding claims,
**characterised in that**
that the camera unit (11) is held movably on a sled (24) in the housing (14), wherein on the one hand the sled (24) serves as an actuating lever for the closing element (15) and on the other hand can be actuated by the connecting element (22).

10. The device (10) according to claim 9,
**characterised in that**
the sled (24) completely surrounds the camera unit (11) and the camera unit (11) is positively secured in the sled (24), more particularly by means of a snap-in retaining means (25).

11. The device (10) according to any one of the preceding claims,
**characterised in that**
the camera unit (11) and/or the closing element (15) is/are positively and/or non-positively fixed in at least the two end settings (I, II).

12. A method of operating a device (10), in particular for a tailgate (80) of a vehicle, with a camera unit (11) for recording images of the exterior of the vehicle and with an operating unit (12) for operating a part of the vehicle, wherein
the camera unit (11) and the operating unit (12) are in particular arranged next to each other on the vehicle by means of a carrier element (13), and
at least the camera unit (11) is accommodated in a protected manner in a casing (14), and
a movable closing element (15) is present for closing a housing opening (14.3), which can be moved into at least two end settings (I, II) by means of an actuating unit (16), namely a closed setting (I) and an open setting (II),
**characterised in that**
in an first assembly step a section (10.1) of the device (10) is assembled from outside through an aperture on the vehicle, and
**in that** in a further assembly step the remaining section (10.2) of the device (10) is assembled from inside, wherein the housing (14) for the camera unit (11) is formed by joining both sections (10.1, 10.2) together,
wherein the housing (14) is structured in at least two sections (14.1, 14.2), wherein the carrier element (13) forms a first housing section (14.1) on which the operating unit (12) and the camera unit (11) are arranged,
and the actuating unit (16) is arranged on a second housing section (14.2), wherein a linear guide (17) is provided between the first housing section (14.1) and/or the carrier element (13) and the second housing section (14.2), in order to combine the two housing sections (14.1, 14.2) into one housing (14), wherein the second housing section (14.2) is laterally pushed onto the first housing section (14.1),
and wherein a labyrinth seal (18) is present between the first housing section (14.1) and the second housing section (14.2) which is formed by the linear guide (17).

13. The method according to claim 12,
**characterised in that**
the housing (14) is structured in at least two sections (14.1, 14.2), wherein
the carrier element (13) forms a first housing section (14.1) on which the operating unit (12) and the camera unit (11) is arranged, and the carrier element (13) is mounted from the outside through the aperture (83) on the vehicle in the first assembly step,
and the actuating unit (16) is arranged on a second housing section (14.2), wherein the two housing sections (14.1, 14.2) are joined together in a further mounting step.

14. The method according to claim 12 or 13,
**characterised in that**
the device (10) is held on the vehicle by means of at least one fastening element (26), in particular a fastening bracket (26),
wherein, in particular, the fastening element (26) holds the device (10) at least by way of a positive connection and the fastening element (26) is only pushed on for fastening of the device (10).

## Revendications

1. Dispositif (10), notamment pour un hayon arrière (80) d'un véhicule, avec une unité de caméra (11), qui sert à la saisie d'images de la zone extérieure du véhicule, et avec une unité de commande (12), qui sert à commander une partie du véhicule,
l'unité de caméra (11) et l'unité de commande (12) étant disposées notamment l'une à côté de l'autre sur le véhicule au moyen d'un élément de support (13), et au moins l'unité de caméra (11) étant logée protégée dans un boîtier (14), et un élément de fermeture mobile (15) étant présent pour fermer une ouverture de boîtier (14.3), lequel pouvant être déplacé par une unité d'entraînement (16) dans au moins deux positions finales (I, II), notamment une position de fermeture (I) et une position d'ouverture (II),
le boîtier (14) étant constitué au moins en deux parties (14.1, 14.2),
l'élément de support (13) formant une première partie de boîtier (14.1) sur laquelle l'unité de commande (12) et l'unité de caméra (11) peuvent être disposées,
et l'unité d'entraînement (16) pouvant être disposée sur une deuxième partie de boîtier (14.2),
**caractérisé en ce qu'**
un guidage linéaire (17) est prévu entre la première partie de boîtier (14.1) et/ou l'élément de support (13) et la deuxième partie de boîtier (14.2) pour assembler les deux parties de boîtier (14.1, 14.2) en un boîtier (14), la deuxième partie de boîtier (14.2) pouvant être déplacée latéralement sur la première partie de boîtier (14.1), et
**en ce qu'**un joint à labyrinthe (18) est présent entre la première partie de boîtier (14.1) et la deuxième partie de boîtier (14.2), qui est formé par le guidage linéaire (17).

2. Dispositif (10) selon la revendication 1,
**caractérisé en ce que**
l'ouverture de boîtier (14.3) sert au moins pour l'unité de caméra (11) à la saisie d'images de la zone extérieure d'un véhicule et est présente dans la première partie de boîtier (14.1), et
l'élément de fermeture mobile (15) est disposé sur la première partie de boîtier (14.1), l'élément de fermeture mobile (15) comportant notamment un axe de rotation fixe (15.1).

3. Dispositif (10) selon l'une quelconque des revendications précédentes,
**caractérisé en ce que**
les deux parties de boîtier (14.1, 14.2) sont reliées entre elles par au moins un raccord à encliquetage (19).

4. Dispositif (10) selon l'une quelconque des revendications précédentes,
**caractérisé en ce que**
l'élément de support (13) forme au moins une première paroi de boîtier plate (13.1) du boîtier (14) sur laquelle est disposé notamment un élément de joint d'étanchéité (20), lequel coopère avec un bord de boîtier (14.4) de la deuxième partie de boîtier (14.2).

5. Dispositif (10) selon l'une quelconque des revendications précédentes,
**caractérisé en ce que**
l'élément de support (13) forme deux parois de boîtier (13.1, 13.2) du boîtier (14), la première paroi de boîtier (13.1) est configurée plat et est pour l'essentiel disposée de façon orthogonale par rapport à la deuxième paroi de boîtier (13.2), la deuxième paroi de boîtier (13.2) comportant l'ouverture de boîtier (14.3).

6. Dispositif (10) selon l'une quelconque des revendications précédentes,
**caractérisé en ce que**
l'unité de commande (12) et/ou l'unité d'entraînement (16) sont disposés en dehors du boîtier (14), notamment sur un moyen de raccord à encliquetage (21).

7. Dispositif (10) selon l'une quelconque des revendications précédentes,
**caractérisé en ce que**
l'unité d'entraînement (16) est disposée notamment de l'extérieur sur la deuxième partie de boîtier (14.2) et entraîne l'élément de fermeture mobile (15) par au moins un élément de liaison (22), un passage (14.5) existant notamment dans la deuxième partie de boîtier (14.2) pour l'élément de liaison (22).

8. Dispositif (10) selon l'une quelconque des revendications précédentes,
**caractérisé en ce que**
l'unité de caméra (11) est disposée mobile dans le boîtier (14), l'unité de caméra (11) se trouvant dans la position de fermeture (I) derrière l'élément de liaison (15) dans le boîtier (14) et étant positionnée dans la position d'ouverture (II) découverte de l'élément de fermeture (15) pour la saisie d'images,
l'unité de caméra (11) pouvant être mobile par l'unité d'entraînement (16), et l'unité de caméra (11) étant notamment reliée à un mécanisme d'entraînement (23) pour l'élément de fermeture (15).

9. Dispositif (10) selon l'une quelconque des revendications précédentes,
**caractérisé en ce que**
l'unité de caméra (11) est maintenue mobile sur un chariot (24) dans le boîtier (14), le chariot (24) servant d'une part de levier d'entraînement pour l'élément de fermeture (15) et pouvant être entraîné d'autre part par l'élément de liaison (22).

10. Dispositif (10) selon la revendication 9,
**caractérisé en ce que**
le chariot (24) comprend entièrement l'unité de caméra (11) et l'unité de caméra (11) est fixée dans le chariot (24) par conformité de forme, notamment par un moyen de maintien à encliquetage (25).

11. Dispositif (10) selon l'une quelconque des revendications précédentes,
**caractérisé en ce que**
l'unité de caméra (11) et/ou l'élément de fermeture (15) sont fixés au moins dans les deux positions finales (I, II) par conformité de forme et/ou par conformité de force.

12. Méthode pour faire fonctionner un dispositif (10), notamment pour un hayon arrière (80) d'un véhicule, avec une unité de caméra (11), qui sert à la saisie d'images de la zone extérieure du véhicule et avec une unité de commande (12), qui sert à commander une partie du véhicule,
l'unité de caméra (11) et l'unité de commande (12) étant disposées notamment l'une à côté de l'autre sur le véhicule au moyen d'un élément de support (13), et au moins l'unité de caméra (11) est logée protégée dans un boîtier (14), et
un élément de fermeture mobile (15) étant présent pour fermer une ouverture de boîtier (14.3), lequel peut être mobile par une unité d'entraînement (16) dans au moins deux positions finales (I, II), notamment une positon de fermeture (I) et une position d'ouverture (II),
**caractérisée en ce que**
dans une première phase de montage, une partie (10.1) du dispositif (10) est montée sur le véhicule de l'extérieur à travers un passage, et
**en ce que** dans une autre phase de montage l'autre partie (10.2) du dispositif (10) est monté depuis l'intérieur, le boîtier (14) pour l'unité de caméra (11) étant formée par un assemblage des deux parties (10.1, 10.2),
le boîtier (14) étant conçu au moins en deux parties (14.1, 14.2), l'élément de support (13) formant une première partie de boîtier (14.1) sur laquelle l'unité de commande (12) et l'unité de caméra (11) sont disposées,
et l'unité d'entraînement (16) étant disposée sur une deuxième partie de boîtier (14.2) ,
un guidage linéaire (17) étant prévu entre la première partie de boîtier (14.1) ou l'élément de support (13) et la deuxième partie de boîtier (14.2) pour assembler les deux parties de boîtier (14.1, 14.2) en un boîtier (14), la deuxième partie de boîtier (14.2) étant déplacée latéralement sur la première partie de boîtier (14.1), et un joint à labyrinthe (18) étant présent entre la première partie de boîtier (14.1) et la deuxième partie de boîtier (14.2), qui est formé par le guidage linéaire (17).

13. Procédé selon la revendication 12,
**caractérisé en ce que**
le boîtier (14) est conçu au moins en deux parties (14.1, 14.2),
l'élément de support (13) formant une première partie de boîtier (14.1) sur laquelle sont disposées l'unité de commande (12) et l'unité de caméra (11) et la partie de support (13) étant montée par le passage (83) sur le véhicule dans une première phase de montage,
et l'unité de montage (16) étant disposée sur une deuxième partie de boîtier (14.2), les deux moitiés de boîtier (14.1, 14.2) étant assemblées dans une autre phase de montage.

14. Procédé selon la revendication 12 ou 13,
**caractérisé en ce que**
le dispositif (10) est fixé sur le véhicule par le biais d'au moins un élément de fixation (26) notamment un étrier de fixation (26),
l'élément de fixation (26) maintenant notamment le dispositif (10) par conformité de forme et l'élément de fixation (26) n'étant repoussé que pour fixation du dispositif (10).
